# EUROPÄISCHE PATENTSCHRIFT

(11) **EP 1 560 741 B1**
(45) Veröffentlichungstag und Bekanntmachung des Hinweises auf die Patenterteilung: **05.11.2008**
(21) Anmeldenummer: 03788974.8
(22) Anmeldetag: 29.10.2003
(51) Int. Cl.: B62D 25/00

(54) **GRUNDTRÄGER FÜR EINE FAHRZEUGSTRUKTUR SOWIE VERFAHREN ZUR HERSTELLUNG EINES GRUNDTRÄGERS**
BASIC SUPPORT FOR A VEHICLE STRUCTURE AND METHOD FOR THE PRODUCTION THEREOF
SUPPORT DE BASE CONCU POUR UNE STRUCTURE DE VEHICULE ET SON PROCEDE DE PRODUCTION

(30) Priorität: 05.11.2002 DE 10251762
(43) Veröffentlichungstag der Anmeldung: 10.08.2005
(73) Patentinhaber: Behr GmbH & Co. KG, 70469 Stuttgart (DE)
(72) Erfinder: NEUSS, Sabine, 48009 Birmingham, Mi (US); UNHOLZ, Volker, 70619 Stuttgart (DE); WOLF, Walter, 71570 Oppenweiler-Zell (DE)
(74) Vertreter: Grauel, Andreas
(86) Internationale Anmeldenummer: PCT/EP2003/011998
(87) Internationale Veröffentlichungsnummer: WO 2004/041622

(56) Entgegenhaltungen:
- DE-A- 10 003 575
- DE-U- 20 008 201
- DE-U- 20 013 208
- DE-U- 29 916 466
- US-A- 5 387 023
- US-A- 5 934 733
- US-B1- 6 276 739

## Beschreibung

Die Erfindung betrifft einen Grundträger zwischen zwei Randbereichen einer Fahrzeugstruktur. Des Weiteren betrifft sie ein Verfahren zur Herstellung eines derartigen Grundträgers.

Grundträger, z.B. Instrumententräger, erstrecken sich üblicherweise zwischen zwei Randbereichen einer Fahrzeugstruktur, beispielsweise im Bereich zwischen den beiden vorderen A-Säulen quer zur Fahrzeuglängsachse. Ein derartiger Grund-, insbesondere Instrumententräger besteht im Wesentlichen aus einem Tragprofil, insbesondere einem Hohlprofil, welches üblicherweise in Hybridbauweise hergestellt wird. Bei einer Hybridbauweise wird eine längliche Metallschale, die gewöhnlich in U- oder Q-Form ausgeprägt ist, von der offenen Seite mit einer Verstärkung, insbesondere einer inneren Verrippung eines anderen Materials, z.B. Kunststoff, ausgebildet. Die innere Verrippung wird dabei üblicherweise durch einen Urformprozess, z.B. Spritzguss- oder Schaumgussverfahren, gefügt.

Die in der Metallschale oder dem Hohlprofil eingefügte Verrippung, auch Profilkern genannt, wird entsprechend auftretenden Belastungen ausgebildet. Beispielsweise wird der Profilkern durch rautenförmig angeordnete Rippen ausgebildet. Darüber hinaus ist es möglich in den Profilkern oder die Verrrippung ein Rohr zur Luftführung, z.B. für eine Klimaanlage, einzubringen. Dies ist beispielsweise aus der DE 299 16 466 U1 bekannt.

Darüber hinaus kann an den Profilen mindestens ein Halteelement zur Anbindung von Funktionselementen vorgesehen sein. Dabei werden die Halteelemente üblicherweise nach dem eigentlichen Einfügungsprozess des Profilkerns an das Hohlprofil angebracht, z. B. genietet, geschweißt oder geschraubt. Nachteilig dabei ist, dass zusätzliche Teile für den Zusammenbau des Grundträgers benötigt werden. Ferner müssen die verschiedenen Halteelemente oder Anschlüsse teilweise in einzelnen Arbeitsgängen mit verschiedenartigen Fügeoperationen an dem Träger befestigt oder verbunden werden, wodurch sich die Anzahl der Arbeitsgänge nochmals erhöht.

Aus der DE 200 08 201 U1 ist ein Instrumententafelträger in hybridartiger Konfiguration zur Eingliederung zwischen die A-Säulen eines Kraftfahrzeuges bekannt. Der Instrumententafelträger besteht aus einem länglichen schalenartigen Grundkörper sowie stabilisierenden Einlegeteilen aus metallischen Werkstoffen, welche durch eine angespritzte innere Kunststoffverrippung zu einem Metall/Kunststoffverbundteil gefügt sind.

Ferner zeigt die DE 100 03 575 A1 ein Bauteil für ein Kraftfahrzeug, insbesondere einen Querträger für den Cockpitbereich, wobei das Bauteil als Leichtbauteil mit einem schalenförmigen Grundkörper und mit aus angespritztem Kunststoff bestehenden Verstärkungsrippen ausgebildet ist

Des weiteren zeigt die US 5,934,733, die den Oberbegriff des Anspruchs 1 bildet, einen extrudierten Querträger zur Verbindung der beiden A-Säulen eines Kraftfahrzeugs mit einer Mehrzahl von radial beabstandeten Nuten welche sich der Länge des Trägers nach erstrecken. In diese Nuten können verschiebbare Komponenten eingreifend montiert werden.

Der Erfindung liegt daher die Aufgabe zugrunde, einen Grundträger zwischen zwei Randbereichen einer Fahrzeugstruktur anzugeben, welcher besonders einfach ausgebildet ist und eine gegenüber dem Stand der Technik verbesserte Struktur aufweist. Weiterhin soll ein Verfahren zur Herstellung eines derartigen Grundträgers angegeben werden, welches besonders einfach und kostengünstig ausgestaltet ist.

Die Aufgabe wird gelöst durch einen Grundträger gemäß Anspruch 1, sowie durch ein Verfahren gemäß Anspruch 23.

Der Grundträger umfasst ein Hohlprofil und wenigstens ein Halteelement zur Anbindung von Funktionselementen, bei dem das Halteelement über eine im Hohlraum eingefügte formschlüssige und/oder stoffschlüssige Fügeverbindung an das Hohlprofil befestigt ist.

Die Erfindung geht dabei von der Überlegung aus, dass ein Grundträger zur Anbringung zwischen zwei Randbereichen einer Fahrzeugstruktur derart ausgebildet sein sollte, dass er den Erfordernissen und den technologischen Anforderungen der Industrie angepasst ist. Ein herkömmlicher Grundträger weist aufgrund größerer Wanddicken des zugehörigen Trag- oder Hohlprofils zur Erhöhung der Steifigkeit ein erhöhtes Gewicht auf, welches sich wiederum nachteilig auf den Kraftstoffverbrauch und somit auf die Umwelt auswirkt. Zur Reduzierung des hohen Gewichts sowie zur Verbesserung der Steifigkeit oder Festigkeit des Grundträgers sollte daher ein zur Anbindung von Funktionselementen vorgesehenes Halteelement derart an das Hohlprofil oder Tragprofil befestigt werden, dass dieses einen biege- und torsionssteifen Verbund mit dem Halteelement ermöglicht. Dazu ist das Halteelement über eine form- und/oder stoffschlüssige Fügeverbindung an das Hohlprofil befestigt. Mit anderen Worten: Das Halteelement ist in einem durch das Hohlprofil gebildeten Hohlraum form- und/oder stoffschlüssig eingefügt, indem das Halteelement und das Hohlprofil miteinander in einem einzigen Verarbeitungsschritt gefügt werden. Das Halteelement ist somit über eine innere Verbindung an das Hohlprofil befestigt.

Zum Schutz vor ungewolltem Lösen des gefügten Halteelements sowie für eine besonders hohe Stabilität der das Halteelement und das Hohlprofil miteinander verbindenden Fügeverbindung ist das Halteelement vorzugsweise durch sogenanntes Urformen form- und/oder stoffschlüssig gefügt. Dabei wird das Halteelement durch herkömmliche Urformverfahren, wie z.B. Ausgießen, Eingießen, Einvulkanisieren oder Einschäumen der Fügeverbindung unter Formschluss an das Hohlprofil gefügt bzw. befestigt. Zusätzlich kann das Halteelement durch sogenanntes Umformen, z.B. Nieten an das Hohlprofil befestigt sein. Mit anderen Worten: Das Halteelement kann über eine innere Verbindung, der Fügeverbindung und/oder eine äußere Verbindung, z.B. Clinchen oder Nieten, an das Hohlprofil befestigt.

In Abhängigkeit von an dem Halteelementen anzubindenden Funktionselementen, wie z.B. Airbag, Lenkung, Halter oder Streben, ist das Halteelement einen das Hohlprofil repräsentierenden Hohlraum überbrückend angeordnet. Dabei ist zur Befestigung des Grundträgers an dessen Randbereichen der Fahrzeugstruktur das Halteelement an den Seitenenden des Hohlprofils und demzufolge den Hohlraum an einer Seitenfläche überbrückend angeordnet. Bei einem als Instrumententräger dienenden Grundträger sind auf dem Hohlprofil mehrere Halteelemente zur Anbringung von Instrumenten, wie z.B. Anzeigen, vorgesehen, wobei das Halteelement den Hohlraum an einer Oberfläche, insbesondere Ober- und/oder Unterseite, überbrückt.

Für eine besonders einfache Fügung des Halteelementes an das Hohlprofil weist dieses eine Aussparung auf. Zweckmäßigerweise entspricht die Länge der Aussparung oder Öffnung in etwa der Breite des Hohlraumes. Je nach Anordnung des Halteelements an das Hohlprofil, z.B. auf dessen Oberfläche oder einer der Seitenflächen sind die Abmessungen der Aussparung am betreffenden Querschnitt bzw. Längsschnitt des Hohlraumes angepasst. Die Aussparung oder Öffnung ermöglicht in besonders einfacher Art und Weise die Einführung eines Werkzeuges, z.B. eines Stempels zur Herstellung der Fügeverbindung beim Spritz- oder Gießprozess. Somit ist eine Materialanhäufung unter dem anzubindenden Halteelement beim Herstellen der Fügeverbindung sicher vermieden.

Zur weiteren Gewichtsreduzierung des Grundträgers sowie zur verbesserten Aussteifung des Hohlraumes ist das Halteelement unterhalb von mittels der Aussparung gebildeten Stegen anhand von im Hohlraum eingefügten Rippen gefügt. Hierdurch sind bei sich eigentlich widersprechenden Anforderungen - einer vergleichsweise geringen Rippendicke unter gleichzeitiger Aufrechterhaltung einer hohen Steifigkeit - eine besonders hinreichende Verzugsarmut und Torsionssteifigkeit durch die als Rippen ausgebildete formschlüssige Fügeverbindung des Halteelements im Hohlraum des Hohlprofils gegeben. Je nach gewünschter Steifigkeit oder Gewichtsreduzierung kann eine einzelne Rippe oder mehrere Rippen im Hohlraum des Hohlprofils angeordnet sein. Für ein verbessertes Torsionsverhalten weist die Rippe einen sogenannten Hinterschnitt auf. Mit anderen Worten: Die Rippe ist mit einer Verkrallung versehen. In einer bevorzugten Ausführungsform weist die Rippe im Längsschnitt zumindest an der in den Hohlraum angeordneten Unterseite eine Mäanderform auf. Die andere Seite, insbesondere über den Hohlraum herausragende Oberseite der Rippe kann dabei derart geformt und mit einer Aussparung versehen sein, dass diese als Halteelement dient. Für einen besonders guten Verbund, z.B. Blech-Kunststoff-Verbund des als Blech ausgebildeten Hohlprofils und der Kunststoffrippe bzw. dem Kunststoffprofil, ist die Rippe gelocht ausgeführt.

Um eine gegenüber der rippenartigen Fügeverbindung verbesserte Steifigkeit oder Festigkeit des Hohlprofils zu erzielen, ist zweckmäßigerweise das Halteelement unterhalb von mittels der Aussparung gebildeten Stegen anhand eines im Hohlraum eingefügten U-Profils gefügt. Das U-Profil wird dabei schachtelartig im Hohlraum des ebenfalls u-förmigen Hohlprofils eingefügt. Durch eine eine derartige Querbrücke oder einen offenen Querkasten bildenden Fügeverbindung, welche im Hohlraum des Hohlprofils eingefügt ist, ist das Hohlprofil zusätzlich gegen mechanische Beanspruchungen, z.B. Beulen, geschützt. Je nach Funktion und Art der am Grundträger zu befestigenden Instrumente und der daraus resultierenden Anzahl von am Hohlprofil zu befestigenden Halteelementen kann die Fügeverbindung verschiedenartig, rippen- oder kastenförmig ausgebildet sein.

Für eine Grundaussteifung des Hohlprofils ist zweckmäßigerweise dieses im Hohlraum mit einem Profilkern versehen. Bevorzugt ist der Profilkern durch Umformen formschlüssig in den Hohlraum gefügt. Als besonders vorteilhafte Ausführungsform des Profilkerns ist dieser als Wabenkern, Rautenkern oder Verrippung ausgebildet. Der Profilkern ist dabei insbesondere quer oder schräg in den Hohlraum des Hohlprofils für eine besonders gute Aussteifung eingefügt. Je nach Orientierung der Rippen, z.B. Rauteform, ergibt sich eine besonders gute Biege- oder Torsionssteifigkeit.

Je nach Anwendung und Funktion des Grundträgers ist das Hohlprofil zweckmäßigerweise als U- oder Ω-Profil ausgebildet. Alternativ kann das Hohlprofil als Hohlzylinder ausgebildet sein. Bei einem U-förmigen und somit zu einer Oberfläche hin offenen Hohlprofil ist das Halteelement in einer die beiden Schenkel des Hohlprofils verbindenden Anordnung und somit die Öffnung des Hohlraumes überbrückenden Anordnung an das Hohlprofil befestigt. Zur Verstärkung der Aussteifung oder Festigkeit des Hohlprofils ragt der Profilkern zweckmäßigerweise über eine Öffnung des Hohlraumes hinaus. Alternativ oder zusätzlich kann das Hohlprofil, insbesondere dessen Öffnung, mit einem Deckel versehen sein. In einer bevorzugten Ausführungsform entspricht die Höhe des Profilkerns der Höhe des Hohlraumes. Hierdurch ist das planar ausgebildete Halteelement besonders einfach auf der Oberfläche des Hohlprofils positionierbar. Darüber hinaus weist der Profilkern in etwa die gleichen Abmessungen des Hohlraumes auf. D.h. der Profilkern erstreckt sich über die gesamte Länge, Breite und Höhe des Hohlraumes und schließt mit dessen Oberflächen ab. Alternativ oder zusätzlich kann der Profilkern im Bereich zwischen zwei Halteelementen aus dem Hohlraum hinausragen.

In einer weiteren bevorzugten Ausführungsform des Grundträgers ist dieser in Hybridbauweise ausgebildet, wobei das Hohlprofil aus einem ersten Material und das Halteelement aus einem zweiten Material gebildet sind. Ein derartiger in Hybridbauweise ausgebildeter Grundträger weist eine besonders hohe Steifigkeit bei gleichzeitig einer festen und möglichst leichten Bauweise auf. Das Hohlprofil ist dabei aus Metall, z.B. Stahl, Aluminium, Kupfer, Magnesium gebildet. Das die Versteifungsfunktion verstärkende Halteelement ist bevorzugt aus thermoplastischem Kunststoff gebildet. Alternativ kann das Halteelement aus einem Metall oder einem anderen elastischen Material gebildet sein. Je nach der für die zugrunde liegenden Funktion erforderlichen Festigkeit oder Steifigkeit kann der Kunststoff mit oder ohne Füll- und Verstärkungsstoffe versehen sein. Als thermoplastische Kunststoffe werden beispielsweise Polyamide, Polyolefine, Styrole oder andere Ein- oder Mehrkomponentenkunststoffe, wie z.B. PU-Harze, verwendet werden.

Bei einer Mehrfachverwendung des Grundträgers, z.B. sowohl zur Luftführung als auch zur Halterung von Komponenten, ist zweckmäßigerweise in das Hohlprofil ein Führungselement, z.B. eine Luftführung integriert, an welche das Halteelement und/oder der Profilkern form- und/oder stoffschlüssig gefügt sind.

Die bezüglich des Verfahrens zur Herstellung eines derartigen Grundträgers genannte Aufgabe wird erfindungsgemäß gelöst, indem ein Hohlprofil und wenigstens ein Halteelement zur Anbindung von Funktionselementen über eine im Hohlraum des Hohlprofils durch Urformen eingebrachte Fügeverbindung formschlüssig miteinander gefügt werden. Mit anderen Worten: Der Grundträger wird in Hybridbauweise aus zwei oder mehreren Einzelteilen gebildet - dem Hohlprofil und wenigstens einem Halteelement, welche aus unterschiedlichem oder gleichem Material gebildet sein können. Über eine durch Urformen gebildete und im Hohlraum eingefügte formschlüssige Fügeverbindung (= Innenverbindung), welche ein weiteres Material aufweist, werden das Hohlprofil und das Halteelement miteinander gefügt. Der Vorteil dieser durch Urformen hergestellten Fügeverbindung besteht darin, dass das Hohlprofil mit dem Halteelement in einem einzigen Arbeitsschritt zum Grundträger gefertigt werden kann.

Als Verfahren zur Herstellung eines ein Hohlprofil mit integriertem Halteelement aufweisenden Grundträgers durch eine formschlüssige Fügeverbindung der Elemente eignen sich insbesondere herkömmliche Spritzgießverfahren oder Gießverfahren mit anschließender Polymerisation, z.B. ein Polyamid-Guss, Schäum- oder Spritzverfahren, Schaumgießverfahren, insbesondere Polyurethan-Schaum-Verfahren, z.B. Thermoplast-Schaum-Guss (kurz TSG genannt). Durch die Verwendung der vorgenannten Verfahren bei einem wenigstens eine Stufe aufweisenden Verarbeitungsprozess ist der Vorteil gegeben, dass andere aufwändige Fertigungsprozesse zur Anbindung der Halteelemente entfallen können. Insbesondere ist die Anzahl von Verarbeitungsschritten zur Herstellung des Grundträgers deutlich reduziert. Auch sind aufwendige und somit kostenintensive Werkzeuge zur Befestigung des Halteelements sicher vermieden.

In einer bevorzugten Ausführungsform des Herstellungsverfahrens wird das Halteelement während des Fügeprozesses beim Urformen selbst geformt und in das Hohlprofil gefügt. Hierbei weist das Halteelement das selbe Material auf wie ein ebenfalls durch den Fügeprozess zur Versteifung in das Hohlprofil eingefügter Profilkern. Der Vorteil dieses Herstellungsverfahrens liegt darin, dass die endgültige Position des Halteelementes durch das im Fertigungsprozess genutzte Werkzeug festgelegt wird. Hierdurch ist eine höhere Genauigkeit mit einem besonders engen Toleranzbereich ermöglicht. Alternativ zum während des Verarbeitungsprozesses geformten Halteelementes kann das Halteelement vorgefertigt sein. Zweckmäßigerweise wird dabei das Halteelement vor dem Verarbeitungsprozess am Hohlprofil positioniert und währenddessen formschlüssig durch Urformen an das Hohlprofil gefügt (= Außenverbindung). Für eine derartige Vorfixierung oder Positionierung des Halteelementes am Hohlprofil werden bekannte Umform-Verfahren, wie z.B. Biegen, Walzen, Bördeln, Durchstecken, Schränken, Sicken, Clinchen, verwendet. Bei aus Metall gebildeten Halteelementen werden zur Vorfixierung bekannte Fügeverfahren, wie z.B. Schweißen, Nieten, Löten, Clinchen, verwendet.

Des Weiteren lassen sich in Abhängigkeit vom anzuwendenden Fügeverfahren die Einzelteile - das Hohlprofil und das Halteelement, insbesondere wenn diese aus Metall ausgebildet sind - vor oder nach dem Fügeverfahren oberflächenbehandeln. Hierbei werden die Oberflächen des Grundträgers und dessen Elemente beispielsweise lackiert oder beschichtet. Als zur Vorfixierung am besten geeignete Fügeverfahren wird vorteilhaft dasjenige Verfahren, z.B. Clinchen oder Stanznieten, ausgewählt, bei dem die formschlüssige Fügeverbindung durch Urformen und die Vorfixierung durch Umformen durch ein einziges Werkzeug selbst ausgeführt werden kann. Beispielsweise kann durch die Schließbewegung des Werkzeuges, insbesondere eines Spritzwerkzeuges, das. Halteelement durch Clinchen oder Stanznieten erst vorfixiert werden und anschließend durch Ausgießen der Fügeverbindung formschlüssig gefügt werden. Ein derartiges Verfahren hat den Vorteil, dass die Bauteilposition der Einzelteile, insbesondere der Halteelemente, durch das Werkzeug selbst festgelegt wird. Zweckmäßigerweise wird der Profilkern und/oder das Halteelement beim Urformen als Spritzguss-Werkstück spritzgegossen oder schaumgegossen.

Die mit der Erfindung erzielten Vorteile bestehen insbesondere darin, dass durch ein über eine formschlüssige Fügeverbindung im Hohlraum des Hohlprofils befestigten Halteelement ein besonders einfacher und formstabiler sowie torsionssteifer Grundträger ermöglicht ist, der gleichzeitig ein besonders geringes Eigengewicht aufweist und besonders einfach zu fertigen ist. In der bevorzugten Ausführungsform wird das Halteelement beim Fügen im Spritzguss-Werkzeug selbst geformt und in das Hohlprofil eingefügt. Alternativ kann das Halteelement und das Hohlprofil vor dem Urformprozess, insbesondere Spritzprozess, ins Werkzeug eingebracht werden und wirtschaftlich in einem einzigen Schritt zu einer fertigen Baugruppe zusammengebracht werden (sogenanntes In-Mould-Assembly-Verfahren).

Ausführungsbeispiele der Erfindung werden anhand einer Zeichnung näher erläutert. Darin zeigen:
- Figur 1: schematisch einen Grundträger mit einem Hohlprofil und wenigstens einem Halteelement zur Anbindung von Funktionselementen in perspektivischer Darstellung,
- Figur 2A bis 2C: schematisch alternative Ausführungsformen für einen Grundträger mit einem Hohlprofil und einem über die Höhe des Hohlprofils verlängerten Profilkern in perspektivischer Darstellung,
- Figuren: 3A bis 3C schematisch im Querschnitt bzw. in perspektivischer Darstellung eine weitere Ausführungsform für einen Grundträger mit einem rippenförmigen Halteelement,
- Figur 4: schematisch eine weitere Ausführungsform für einen Grundträger mit einem integrierten Führungselement und einem eingefügten Profilkern, und
- Figur 5: schematisch eine weitere Ausführungsform für einen Grundträger mit einem integrierten Führungselement und einem eingefügten Profilkern sowie einem Halteelement.

Einander entsprechende Teile sind in allen Figuren mit den gleichen Bezugszeichen versehen.

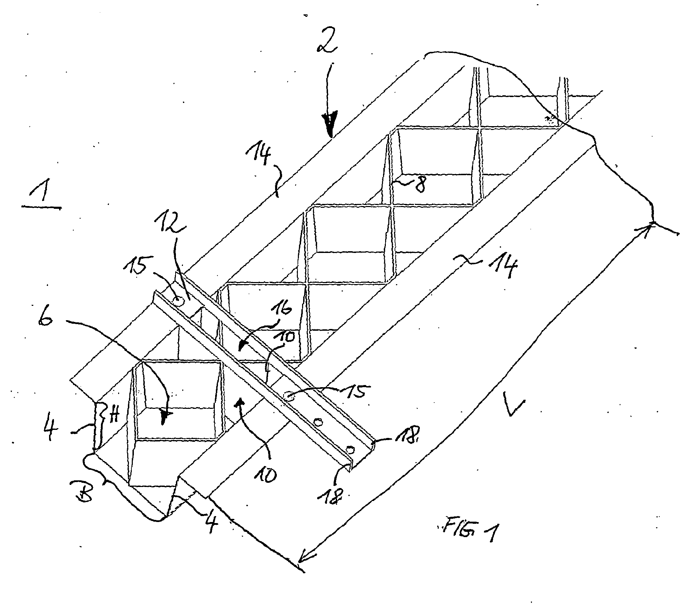

Figur 1 zeigt einen Grundträger 1, der beispielsweise zwischen zwei nicht näher dargestellten Randbereichen einer Fahrzeugstruktur angeordnet ist. Beispielsweise ist der Grundträger 1 als sogenannter Instrumententräger zwischen zwei A-Säulen eines Fahrzeugs angeordnet.

Der Grundträger 1 umfasst ein Hohlprofil 2. Das Hohlprofil 2 ist als U- oder Ω-Profil ausgebildet. Alternativ kann das Hohlprofil 2 als Hohlzylinder ausgebildet sein. Das Hohlprofil 2, auch Trägerprofil genannt, besteht aus einem ersten Material, insbesondere aus Metall, z.B. aus Stahl, Aluminium, Magnesium oder Kupfer. Das aus einem derartigen ersten Material gebildete Hohlprofil 2 ist ein sogenanntes hohes E-Modul (= Elastizitäts-Modul) mit einer hohen Steifigkeit bei einer besonders geringen Dichte. Das in U- oder Ω-Form ausgeprägte Hohlprofil 2 (auch längliche Metallschale genannt) ist in einem zwischen den Schenkeln 4 des Hohlprofils 2 gebildeten Hohlraum 6 mit einem Profilkern 8 versehen.

Der Profilkern 8 ist in der Form einer inneren Verrippung zur Aussteifung des Hohlprofils 2 in dessen Hohlraum 6 eingefügt. Der Profilkern 8 ist im Ausführungsbeispiel als Wabenkern oder Rautenkern ausgebildet. Der Profilkern 8 erstreckt sich dabei im wesentlichen über die gesamte Länge L, Breite B und Höhe H des Hohlraumes 6 des Hohlprofils 2. Des Weiteren kann der Profilkern 8 über die Länge L des Hohlprofils 2 segmentiert sein, indem in Abhängigkeit vom vorgegebenen Aussteifungsgrad der Profilkern 8 abwechselnd rauten- oder wabenförmig ausgebildet ist. Je nach Aussteifungs- oder Festigkeitsgrad kann der Profilkern 8 auch eine andere Form, z.B. Z-förmig verlaufende Rippen, aufweisen.

Zum funktionsspezifischen Anbau von Fahrzeugkomponenten, wie z.B. Airbag, Lenkung, Haltern oder Streben, weist der Grundträger 1 ein Halteelement 12 auf, dass an das Hohlprofil 2 über eine im Hohlraum 6 eingefügte form- und/oder stoffschlüssige Fügeverbindung 10 befestigt ist. Das Halteelement 12 ist des Weiteren den Hohlraum 6 überbrückend an das Hohlprofil 2 angeordnet. D.h. das Halteelement 12 verbindet die beiden Schenkel 4 des Hohlprofils 2. Hierzu liegt das Halteelement 2 auf Auskragungen 14 der Schenkel 4 flächig auf. Das Halteelement 12 ist dazu flächig oder planar ausgebildet. Zusätzlich zur Innenverbindung des Halteelements 12 mittels der im Hohlraum 6 eingefügten Fügeverbindung 10 kann das Halteelement 12 beispielsweise mittels Toxen, Clinchen oder Nieten am Hohlprofil 2, z.B. an Ausnehmungen 15 an den Auskragungen 14 fixiert werden (= Außenverbindung).

Des Weiteren weist das Halteelement 12 eine Aussparung 16 auf. Die Aussparung 16 ist dabei in ihren Abmessungen an eine den Hohlraum 6 repräsentierende Öffnung, insbesondere an deren Form angepasst. Dabei kann das Halteelement 12 beispielsweise auch durch ein U-, H-, L-, W- oder Z-Profil gebildet sein. Die formschlüssige Fügeverbindung 10 des Halteelements 12 ist durch unterhalb von mittels der Aussparung 16 gebildeten Stegen 18 rippenförmig im Hohlraum 6 gefügt. Alternativ zur rippenförmigen Ausbildung der formschlüssigen Fügeverbindung 10 kann diese u- oder kastenförmig ausgebildet sein. Dabei ist sowohl die u- oder kastenförmige Fügeverbindung 10 als auch das kastenförmige Hohlprofil 2 schachtelartig miteinander gefügt. Mit anderen Worten: Die geschlossene Seite der kastenförmigen Fügeverbindung 10 ist an die geschlossene Seite des Hohlprofils 2 angefügt. Die offene Seite der kastenförmigen Fügeverbindung 10 und des Hohlprofils 2 weisen in die selbe Richtung. Zur Aussteifung des Hohlprofils 2 ist die kastenförmige Fügeverbindung 10 senkrecht im Hohlraum 6 eingefügt.

In Abhängigkeit von der Anzahl der anzubindenden Funktionselemente können auch mehrere Halteelemente 12 am Grundträger 1 befestigt sein. Im Bereich zwischen zwei Halteelementen 12 kann das Hohlprofil 2, insbesondere dessen Öffnung, mit einem nicht näher dargestellten Deckel versehen sein. D.h. die Höhe des Profilkerns 8 entspricht der Höhe des Hohlraumes 6. Hierdurch ist das planar ausgebildete Halteelement 12 besonders einfach auf der Oberfläche, insbesondere den Auskragungen 14 der Schenkel 4 positionierbar.

In einer bevorzugten Ausführungsform ist der Grundträger 1 in Hybridbauweise ausgebildet. Dazu ist das Hohlprofil 2 aus dem ersten Material, z. B. Stahl, Aluminium oder Magnesium, und das Halteelement 12 aus einem zweiten Material, z. B. thermoplastischen Kunststoff, zur Formung von verschiedenen Haltern, aber auch zur Verstärkung der Versteifungsfunktion. Alternativ kann das Halteelement 12 ebenfalls aus Metall oder einem anderen elastischen Material gebildet sein. Des Weiteren ist der Profilkern 8 aus einem dritten Material, z. B. Kunststoff, gebildet sein. Alternativ kann der Profilkern 8 aus einem anderen leicht formbaren Material, z.B. auch aus einem Metall gebildet sein. Der Profilkern 8 ist insbesondere für eine lösfeste Verbindung, insbesondere Fügeverbindung, mit dem Hohlprofil 2 aus formbarem Kunststoff gebildet. Als formbarer Kunststoff werden beispielsweise Polyamide, Polyolefine, Styrole oder andere Ein- oder MehrkomponentenKunststoffe verwendet. Das Halteelement 12 kann je nach gewünschter Steifigkeit aus einem Metall, insbesondere aus einem Material mit sogenanntem hohen E-Modul gebildet sein. Alternativ kann das Halteelement 12 auch aus einem formbaren Material, z.B. Kunststoff gebildet sein. Je nach Art und Ausbildung des Grundträgers 1 können die einzelnen Komponenten - Hohlprofil 2, Profilkern 8 und Halteelement 12 - aus einer beliebigen Kombination von verschiedenen Materialien in Abhängigkeit von der gewünschten Steifigkeit gebildet sein. Beispielsweise kann der Grundträger 1 als Thermoplast-Spritzguss-Hybrid oder als Metall-Metall-Hybrid ausgebildet sein.

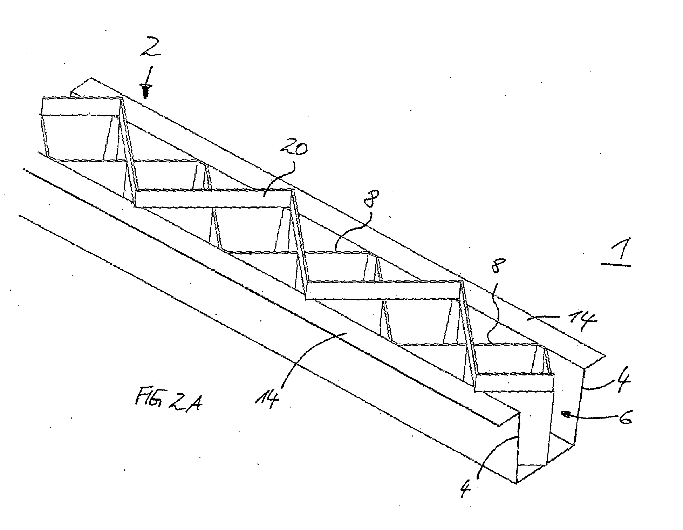

In Figur 2A ist eine alternative Ausführungsform des Grundträgers 1 dargestellt. Dabei ragt der Profilkern 8 zumindest teilweise über den Hohlraum 6 aus dem Hohlprofil 2 heraus. Dazu weist der rautenförmig ausgebildete Profilkern 8 eine in Richtung der z-Achse verlaufende Verlängerung 20 auf. Die Verlängerung 20 ist als z-förmig verlaufendes Profil, Steg, Brücke oder Streifen ausgebildet. Je nach Art und Ausbildung kann die Verlängerung 20 einen an den Profilkern 8 angepassten Verlauf aufweisen. Bevorzugt zur Verbesserung der Steifigkeit des Grundträgers 1 sowie zum Schutz vor mechanischer Beanspruchung weist die Verlängerung 20, auch Verstärkung genannt, eine über die Breite B des Hohlraums 6 hinausgehende Breite auf, wodurch die Verlängerung 20' im Bereich von Knickstellen der z-Form auf den Auskragungen 14 aufliegt. Je nach Herstellungsart kann der Profilkern 8 mit der Verlängerung 20 einteilig oder mehrteilig bzw. schichtartig ausgebildet sein. Die Verlängerung 20 ist insbesondere im Bereich zwischen zwei Halteelementen 12 angeordnet und in mehrere Abschnitte unterteilt. Vorzugsweise ist die Verlängerung 20 aus einem Material mit hohem E-Modul, z. B. hochfestem Stahl.

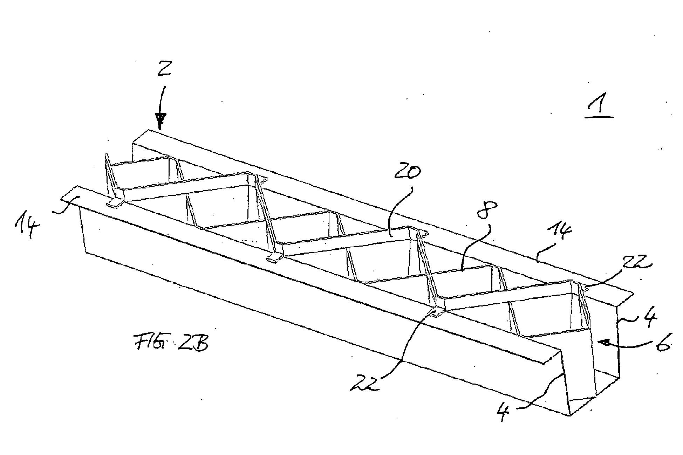

Figur 2B zeigt eine alternative Ausführungsform für einen Grundträger 1 mit dem im Hohlprofil 2 eingefügten Profilkern 8, der wiederum mit der Verlängerung 20 versehen ist. Dabei entspricht der Verlauf der Verlängerung 20 in Längsrichtung des Hohlprofils 2 gesehen in etwa dem Verlauf des Profilkerns 8. Zur Befestigung der Verlängerung 20 am Hohlprofil 2 sind in Längsrichtung des Hohlprofils gesehen mehrere voneinander beabstandete Befestigungselemente 22, z.B. L-Winkel vorgesehen. Die Verlängerung 20 weist gegenüber der Rautenform des Profilkerns 8 einen z-förmigen Verlauf auf.

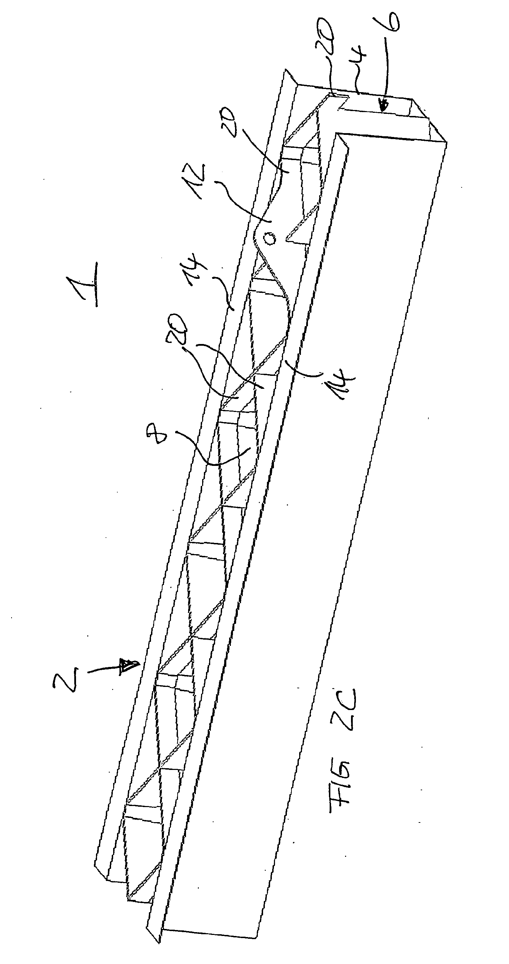

In der Figur 2C ist eine alternative Ausführungsform des Grundträgers 1 dargestellt. Dabei weist die Verlängerung 20 im Querschnitt die gleiche Form wie der Profilkern 8 auf. D.h. beide sind rautenförmig ausgebildet. Anstelle eines separaten Halteelements bildet in diesem Ausführungsbeispiel zumindest ein Teil der Verlängerung 20 das Halteelement 12. Dazu ist die Verlängerung 20 beispielsweise in einer Raute über den Profilkern 8 herausragend ausgeführt und der gewünschten Haltefunktion entsprechend geformt.

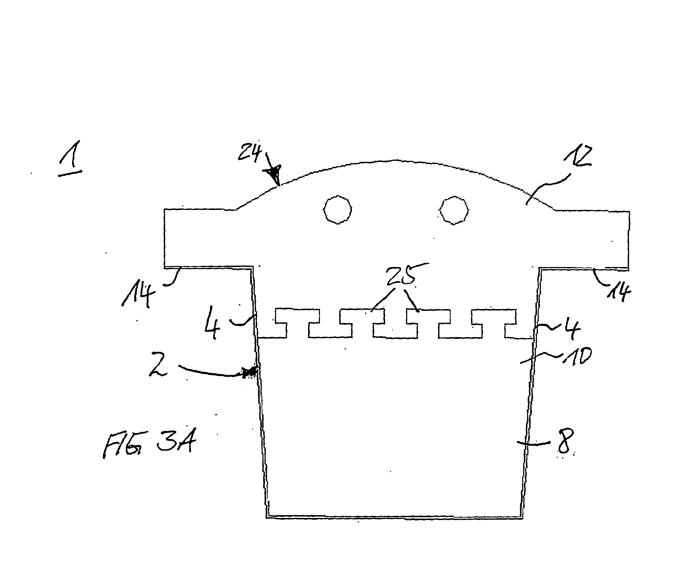

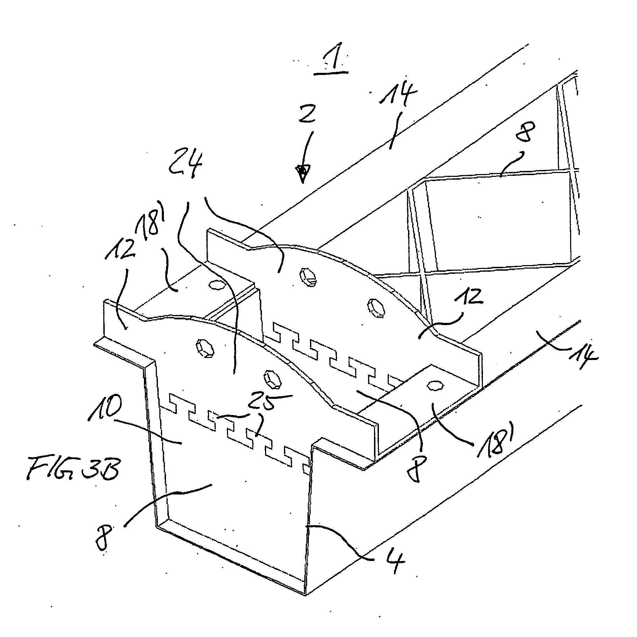

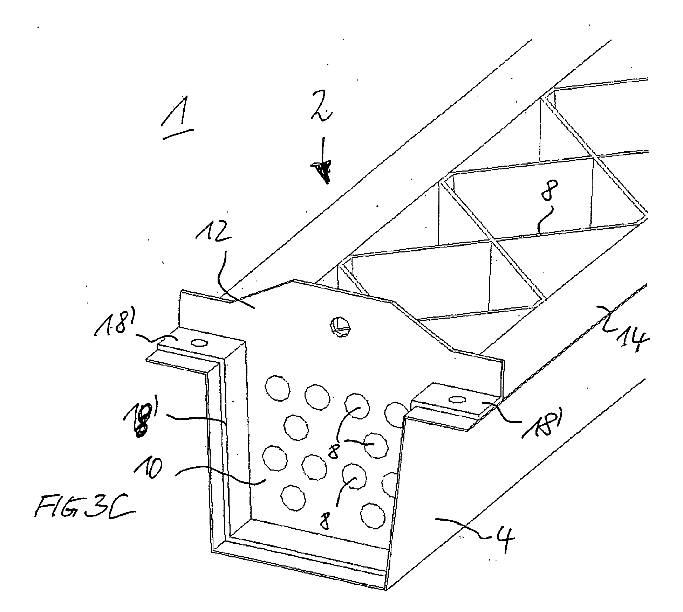

Figur 3A und 3B zeigen eine weitere Ausführungsform für einen Grundträger 1 mit einem rippenförmigen Halteelement 12 im Querschnitt bzw. in perspektivischer Darstellung. Dabei ist das Halteelement 12 durch eine einzelne im Hohlraum 6 eingefügte Rippe 24 gebildet. Je nach eingesetztem Material und somit zugrundeliegendem Herstellungsverfahren kann die Rippe 24 eine Dicke oder Wandstärke von 1,2 mm bis 3,5 mm beim Spritzgießen bzw. von 5 bis 15 mm beim Schaumgießen aufweisen. Die Rippe 24 weist an der in den Hohlraum 6 zeigenden Unterseite eine Verkrallung 25 in Form einer Raute auf. Hierdurch ist ein verbesserter Haftverbund zwischen dem Halteelement 12 und dem eingefügten Profilkern 8 bewirkt. Figur 3B zeigt den Grundträger 1 in perspektivischer Darstellung. Dabei sind zwei in Längsrichtung gesehen voneinander beabstandete Halteelemente 12 im Hohlraum 6 des Hohlprofils 2 eingefügt. Je nach Art und Ausbildung können die beiden das jeweilige Halteelement 12 bildenden Rippen 24 miteinander über einen auf der Auskragung 14 flach aufliegenden Steg 18' verbunden sein. Figur 3C zeigt eine alternative Ausführungsform für eine Rippe 24. Dabei ist die Rippe 24 durchlöchert ausgeführt. Hierdurch ist ein besonders guter Verbund von Rippe 24 und Profilkern 8 gegeben. Die Rippe 24 kann dabei für einen besonders guten Formschluß im Hohlprofil 2 als L-Profil ausgebildet sein. Dabei verläuft der kurze Schenkel der Rippe 24 als Steg 18' flächig entlang der Innenseite des Hohlprofils 2.

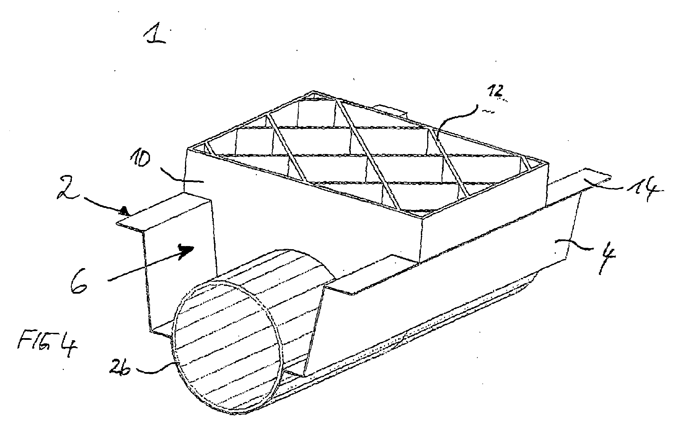

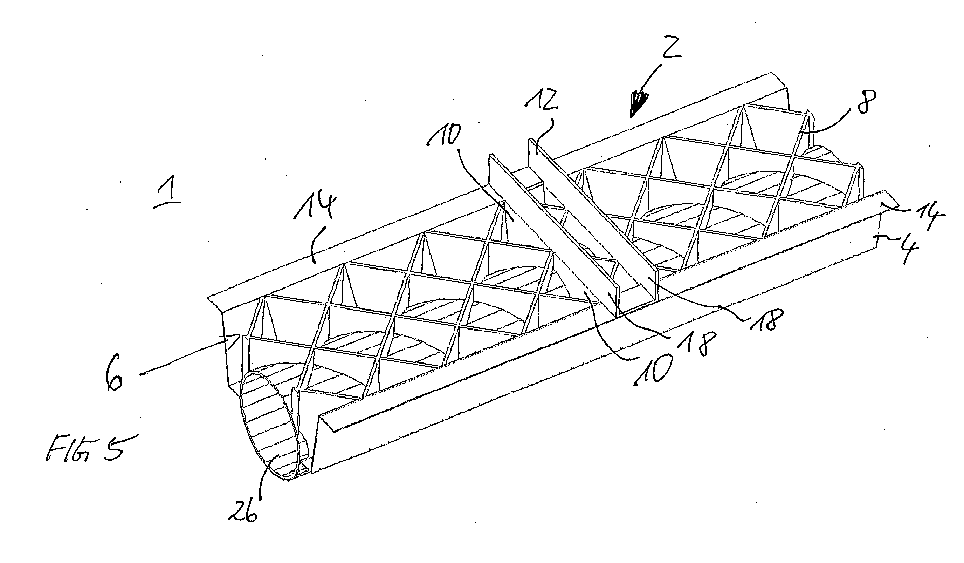

Die Figur 4 zeigt eine alternative Ausführungsform für einen Grundträger 1 mit einem integrierten Führungselement 26, z.B. eine Luftführung, und mit dem integrierten Halteelement 12. Dabei ist der die Versteifung des Hohlprofils 2 bewirkende Profilkern 8, welcher im Hohlraum 6 an das Führungselement 26 formschlüssig und/oder stoffschlüssig gefügt ist, zur besseren Übersicht nicht näher dargestellt. Die Figur 5 zeigt eine weitere Ausführungsform für einen Grundträger 1 mit einem integrierten Führungselement 26 sowie daran angefügten Profilkern 8 und Halteelement 12.

Bei der Herstellung eines Grundträgers 1 nach den Figuren 1 bis 5 mit mindestens einem im Hohlprofil 2 integrierten Halteelement 12 werden das Hohlprofil 2 und das Halteelement 12 durch Urformen über die formschlüssige Fügeverbindung 10 miteinander gefügt. Je nach Herstellungsart des Grundträgers 1 kann das an das U- oder Ω-förmig Hohlprofil 2 zu befestigende Halteelement 12 vorpositioniert oder vorfixiert werden. Hierzu wird das Halteelement 12, z.B. Schottwände oder Verstärkungsbleche, in bekannten Befestigungstechniken, wie z.B. durch Biegen, Walzen, Bördeln, Durchstecken, Schränken, Sicken oder Clinschen an das Hohlprofil 2 vorfixiert. Bei den genannten Befestigungstechniken ist das Halteelement 12 aus Metall gebildet. Alternativ können bei aus Metall gefertigten Halteelementen 12 als Befestigungstechniken, z.B. Schweißen, Nieten, Kleben, Löten zur Vorfixierung angewandt werden. Bei einer alternativen Ausführungsform der Herstellung des Grundträgers 1 wird wie bereits oben beschrieben das Halteelement 12, der Profilkern 2 ggf. mit Verlängerung 20 und die Fügeverbindung 10 in einem einzigen Schritt durch Urformen, z.B. Schäumen, Schaumgießen, Spritzgießen, geformt und gefügt.

Mit anderen Worten: Bei einem möglichen Herstellungsverfahren werden das Hohlprofil 2 und das Halteelement 12 durch den eine verbindende Funktion ausübenden Profilkern 8 durch Form- und/oder Stoffschluß miteinander gefügt. Dabei wird der Profilkern 8 durch Urformen in einem Werkzeug in Form gebracht. Im Werkzeug sind dazu bereits das Hohlprofil 2 und das Halte-element 12 angeordnet; der Profilkern 8 wird durch Urformen, insbesondere Spritzguß, Schaumguß, Polyamidguß, TSG, Thixoformen, Schäumen oder Pressen eingebracht. Alternativ dazu können alle drei Elemente - Hohlprofil 2, Halteelement 12 und Profilkern 8 - getrennt hergestellt und miteinander gefügt werden. Des Weiteren können die einzelnen Elemente - Hohlprofil 2, Halteelement 12 und Profilkern 8 - wiederum mehrteilig ausgeführt sein.

### Bezugszeichenliste

- 1: Grundträger
- 2: Hohlprofil
- 4: Schenkel
- 6: Hohlraum
- 8: Profilkern
- 10: Fügeverbindung
- 12: Halteelement
- 14: Auskragung
- 15: Ausnehmung
- 16: Aussparung
- 18, 18': Stege
- 20: Verlängerung
- 22: Befestigungselemente
- 24: Rippe
- 25: Verkrallung
- 26: Führungselement

- L, B, H: Länge, Breite, Höhe des Hohlraumes des Hohlprofils

## Patentansprüche

1. Grundträger (1) zwischen zwei Randbereichen einer Fahrzeugstruktur, umfassend ein Hohlprofil (2) und wenigstens ein Halteelement (12) zur Anbindung von Funktionselementen, bei dem das Halteelement (12) über eine im Hohlraum (6) eingefügte formschlüssige und/oder stoffschlüssige Fügeverbindung (10) an dem Hohlprofil (2) befestigt ist, **dadurch gekennzeichnet, dass** das Haltelement mindestens einen das Hohlprofil (2) repräsentierenden Hohlraum (6) überbrückenden Steg (18) aufweist, wobei unter dem mindestens einen Steg eine Rippe gebildet ist, die in dem Hohlraum angeordnet ist und mit diesem eine durch Ur- und/oder Umformen hergestellte Fügeverbindung bildet.

2. Grundträger nach Anspruch 1, bei dem das Halteelement (12) eine Aussparung (16) aufweist.

3. Grundträger nach Anspruch 1 oder 2, bei dem die Länge der Aussparung (16) der Breite (B) des Hohlraums (6) entspricht.

4. Grundträger nach einem der Ansprüche 2 bis 3, bei dem das Halteelement (12) unterhalb von mittels der Aussparung (16) gebildeten Stegen (18) im Hohlraum (6) rippenförmig gefügt ist.

5. Grundträger nach einem der Ansprüche 2 bis 3, bei dem das Halteelement (12) unterhalb von mittels der Aussparung (16) gebildeten Stegen (18) anhand eines im Hohlraum (6) u-förmig gefügt ist.

6. Grundträger nach einem der Ansprüche 1 bis 5, bei dem das Halteelement (12) durch eine Rippe (24) gebildet ist, die mit einer Verkrallung (25) versehen ist.

7. Grundträger nach einem der Ansprüche 1 bis 6, bei dem das Halteelement (12) durch eine durchlöcherte Rippe (24) gebildet ist.

8. Grundträger nach einem der Ansprüche 1 bis 7, bei dem das Hohlprofil (2) im Hohlraum (6) mit einem Profilkern (8) versehen ist.

9. Grundträger nach Anspruch 8, bei dem der Profilkern (8) durch Urformen formschlüssig gefügt ist.

10. Grundträger nach einem der Ansprüche 8 oder 9, bei dem der Profilkern (8) als Wabenkern ausgebildet ist.

11. Grundträger nach einem der Ansprüche 1 bis 10, bei dem das Hohlprofil (2) als U- oder Omega-Profil ausgebildet ist.

12. Grundträger nach einem der Ansprüche 8 bis 11, bei dem die Höhe des Profilkerns (8) der Höhe (H) des Hohlraums (6) entspricht.

13. Grundträger nach einem der Ansprüche 8 bis 12, bei dem der Profilkern (8) über eine Oberfläche des Hohlraums (6) hinausragt.

14. Grundträger nach einem der Ansprüche 8 bis 13, bei dem der Profilkern (8) mit einer Verlängerung (20) versehen ist.

15. Grundträger nach Anspruch 14, bei dem die Verlängerung (20) am Hohlprofil (2) und/oder am Profilkern (8) befestigt ist.

16. Grundträger nach Anspruch 14 oder 15, bei dem die Verlängerung (20) zumindest teilweise das Halteelement (12) bildet.

17. Grundträger nach einem der Ansprüche 1 bis 16, bei dem das Hohlprofil (2) aus einem ersten Material und das Halteelement (12) aus einem zweiten Material gebildet sind.

18. Grundträger nach einem der Ansprüche 1 bis 17, bei dem der Profilkern (8) aus einem dritten Material gebildet ist.

19. Grundträger nach einem der Ansprüche 1 bis 18, bei dem das Hohlprofil (2) aus Metall gebildet ist.

20. Grundträger nach einem der Ansprüche 1 bis 19, bei dem das Halteelement (12) aus thermoplastischem Kunststoff gebildet ist.

21. Grundträger nach einem der Ansprüche 1 bis 20, bei dem das Halteelement (12) aus einem Metall gebildet ist.

22. Grundträger nach einem der Ansprüche 1 bis 21, bei dem in das Hohlprofil (2) ein Führungselement (26), insbesondere eine Luftführung integriert ist, an welcher das Halteelement (12) und/oder der Profilkern (8) formschlüssig und/oder stoffschlüssig gefügt sind.

23. Verfahren zur Herstellung eines Grundträgers (1) nach einem der Ansprüche 1 bis 22, bei dem ein Hohlprofil (2) und wenigstens ein Halteelement (12) zur Anbindung von Funktionselementen über eine im Hohlraum (6) des Hohlprofils eingebrachte Fügeverbindung (10) durch Urformen und/oder Umformen formschlüssig und/oder stoffschlüssig miteinander gefügt werden, wobei das Haltelement mindestens einen das Hohlprofil (2) repräsentierenden Hohlraum (6) überbrückenden Steg (18) aufweist unter dem eine Rippe gebildet ist, die in dem Hohlraum angeordnet ist und mit diesem durch Ur- und/oder Umformen gefügt wird.

24. Verfahren nach Anspruch 23, bei dem das Halteelement (12) mit dem Profilkern (8) durch Urformen geformt und in das Hohlprofil (2) gefügt wird.

25. Verfahren nach Anspruch 23 oder 24, bei dem das Halteelement (12) vorgefertigt ist und vor dem Urformen am Hohlprofil (2) positioniert und während des Urformens formschlüssig und/oder stoffschlüssig gefügt wird.

26. Verfahren nach einem der Ansprüche 23 bis 25, bei dem der Profilkern (8) und/oder das Halteelement (12) beim Urformen als Spritzguss-Werkstück spritzgegossen oder schaumgegossen werden bzw. wird.

## Claims

1. Basic support (1) between two edge areas of a vehicle structure comprising a hollow section (2) and at least one mounting element (12) for the attachment of functional elements, in which the mounting element (12) is fixed to the hollow section (2) by a positive and/or fused joint connection inserted into the void (6),
**characterised in that**
the mounting element has at least one web (18) which bridges the void (6) representing the hollow section (2), there being formed beneath the at least one web a rib which is positioned in the void and which forms with the latter a joint connection produced by means of casting and/or forming.

2. Basic support in accordance with claim 1,
in which the mounting element (12) has an open area (16).

3. Basic support in accordance with claim 1 or 2,
in which the length of the open area (16) corresponds to the width (B) of the void (6).

4. Basic support in accordance with one of claims 2 to 3,
in which the mounting element (12) is joined in the form of a rib in the void (6) beneath webs (18) formed by means of the open area (16).

5. Basic support in accordance with one of claims 2 to 3,
in which the mounting element (12) is joined in a U-shape in the void (6) beneath webs (18) formed by means of the open area (16).

6. Basic support in accordance with one of claims 1 to 5,
in which the mounting element (12) is formed by a rib (24) which is provided with a clawed section.

7. Basic support in accordance with one of claims 1 to 6,
in which the mounting element (12) is formed by a perforated rib (24).

8. Basic support in accordance with one of claims 1 to 7,
in which the hollow section (2) is provided with a section core (8) in the void (6).

9. Basic support in accordance with claim 8,
in which the section core (8) is joined positively by means of casting.

10. Basic support in accordance with one of claims 8 or 9,
in which the section core (8) is designed as a honeycomb core.

11. Basic support in accordance with one of claims 1 to 10,
in which the hollow section (2) is designed as a U- or Ω-shaped section.

12. Basic support in accordance with one of claims 8 to 11,
in which the height of the section core (8) corresponds to the height (H) of the void (6).

13. Basic support in accordance with one of claims 8 to 12,
in which the section core (8) projects over a surface of the void (6).

14. Basic support in accordance with one of claims 8 to 13,
in which the profile core (8) is provided with an extension (20).

15. Basic support in accordance with claim 14,
in which the extension (20) is fixed to the hollow section (2) and/or to the section core (8).

16. Basic support in accordance with claim 14 or 15,
in which the extension (20) forms at least part of the mounting element (12).

17. Basic support in accordance with one of claims 1 to 16,
in which the hollow section (2) is made of a first material and the mounting element (12) is made of a second material.

18. Basic support in accordance with one of claims 1 to 17,
in which the section core (8) is made of a third material.

19. Basic support in accordance with one of claims 1 to 18,
in which the hollow section (2) is made of metal.

20. Basic support in accordance with one of claims 1 to 19,
in which the mounting element (12) is made of thermoplastic plastic.

21. Basic support in accordance with one of claims 1 to 20,
in which the mounting element (12) is made of a mental.

22. Basic support in accordance with one of claims 1 to 21,
in which a guide element (26), in particular an air duct, is integrated into the hollow section (2) and the mounting element (12) and/or the section core (8) is/are joined to it positive and/or by fusion.

23. Process for the production of a basic support (1) in accordance with one of claims 1 to 22,
in which a hollow section (2) and at least one mounting element (12) for the attachment of functional elements are joined together positively and/or by fusion by a joint connection (10) fitted in the void (6) of the hollow section by casting and/or forming, the mounting element having at least one web (18) which bridges the void (6) representing the hollow section (2) beneath which is formed a rib which is positioned in the void and joined to it by casting and/or forming.

24. Process in accordance with claim 23,
in which the mounting element (12) is formed to the section core (8) by casting and joined to the hollow section (2).

25. Process in accordance with claim 23 or 24,
in which the mounting element (12) is prefabricated, positioned on the hollow section (2) prior to casting and joined positively and/or by fusion during casting.

26. Process in accordance with one of claims 23 to 25,
in which the section core (8) and/or the mounting element (12) is/are injection moulded or foam moulded as an injected moulded workpiece during the casting.

## Revendications

1. Support de base (1) entre deux zones de bordure d'une structure de véhicule, comprenant un profilé creux (2) et au moins un élément de retenue (12) servant à la fixation d'éléments fonctionnels, support de base dans lequel l'élément de retenue (12) est fixé sur le profilé creux (2) par un assemblage (10) réalisé par continuité de forme et / ou par continuité de matière et introduit dans l'espace creux (6),
**caractérisé en ce que** l'élément de retenue présente au moins une traverse (18) enjambant un espace creux (6) représentant le profilé creux (2), où une nervure est formée sous la traverse au moins au nombre de un, nervure qui est disposée dans l'espace creux et forme avec celui-ci un assemblage réalisé au cours d'une première transformation et / ou au cours d'une deuxième transformation.

2. Support de base selon la revendication 1, dans lequel l'élément de retenue (12) présente un évidement (16).

3. Support de base selon la revendication 1 ou 2, dans lequel la longueur de l'évidement (16) correspond à la largeur (B) de l'espace creux (6).

4. Support de base selon l'une des revendications 2 ou 3, dans lequel l'élément de retenue (12) est assemblé, en forme de nervure, dans l'espace creux (6), au-dessous de traverses (18) formées au moyen de l'évidement (16).

5. Support de base selon l'une des revendications 2 ou 3, dans lequel l'élément de retenue (12) est assemblé en forme de u, à l'aide d'un profilé placé dans l'espace creux (6), au-dessous de traverses (18) formées au moyen de l'évidement (16).

6. Support de base selon l'une quelconque des revendications 1 à 5, dans lequel l'élément de retenue (12) est formé par une nervure (24) qui est dotée d'une partie crénelée (25).

7. Support de base selon l'une quelconque des revendications 1 à 6, dans lequel l'élément de retenue (12) est formé par une nervure perforée (24).

8. Support de base selon l'une quelconque des revendications 1 à 7, dans lequel le profilé creux (2) est doté, dans l'espace creux (6), d'une âme de profilé (8).

9. Support de base selon la revendication 8, dans lequel l'âme de profilé (8) est assemblée par continuité de forme, au cours d'une première transformation.

10. Support de base selon l'une des revendications 8 ou 9, dans lequel l'âme de profilé (8) est configurée comme une âme en nid d'abeilles.

11. Support de base selon l'une quelconque des revendications 1 à 10, dans lequel le profilé creux (2) est configuré comme un profilé en U ou comme un profilé oméga.

12. Support de base selon l'une quelconque des revendications 8 à 11, dans lequel la hauteur de l'âme (8) du profilé correspond à la hauteur (H) de l'espace creux (6).

13. Support de base selon l'une quelconque des revendications 8 à 12, dans lequel l'âme (8) du profilé dépasse d'une surface de l'espace creux (6).

14. Support de base selon l'une quelconque des revendications 8 à 13, dans lequel l'âme (8) du profilé est dotée d'un prolongement (20).

15. Support de base selon la revendication 14, dans lequel le prolongement (20) est fixé sur le profilé creux (2) et / ou sur l'âme (8) du profilé.

16. Support de base selon la revendication 14 ou 15, dans lequel le prolongement (20) forme au moins partiellement l'élément de retenue (12).

17. Support de base selon l'une quelconque des revendications 1 à 16, dans lequel le profilé creux (2) est formé par un premier matériau, l'élément de retenue (12) étant formé par un deuxième matériau.

18. Support de base selon l'une quelconque des revendications 1 à 17, dans lequel l'âme (8) du profilé est formée par un troisième matériau.

19. Support de base selon l'une quelconque des revendications 1 à 18, dans lequel le profilé creux (2) est formé par du métal.

20. Support de base selon l'une quelconque des revendications 1 à 19, dans lequel l'élément de retenue (12) est formé par une matière thermoplastique.

21. Support de base selon l'une quelconque des revendications 1 à 20, dans lequel l'élément de retenue (12) est formé par un métal.

22. Support de base selon l'une quelconque des revendications 1 à 21, dans lequel un élément de guidage (26), en particulier une conduite d'air, est intégré(e) dans le profilé creux (2), conduite d'air sur laquelle l'élément de retenue (12) et / ou l'âme (8) du profilé sont assemblés par continuité de forme et / ou par continuité de matière.

23. Procédé de fabrication d'un support de base (1) selon l'une quelconque des revendications 1 à 22, dans lequel un profilé creux (2) et au moins un élément de retenue (12) servant à la fixation d'éléments fonctionnels sont assemblés les uns aux autres par continuité de forme et / ou par continuité de matière, par un assemblage (10) réalisé dans l'espace creux (6) du profilé creux, au cours d'une première transformation et / ou au cours d'une deuxième transformation, où l'élément de retenue présente au moins une traverse (18) enjambant un espace creux (6) représentant le profilé creux (2), traverse au-dessous de laquelle est formée une nervure qui est disposée dans l'espace creux et est assemblée avec celui-ci, au cours d'une première transformation et / ou au cours d'une deuxième transformation.

24. Procédé selon la revendication 23, dans lequel l'élément de retenue (12), avec l'âme (8) du profilé, est formé au cours d'une première transformation et assemblé dans le profilé creux (2).

25. Procédé selon la revendication 23 ou 24, dans lequel l'élément de retenue (12) est préfabriqué et, avant la première transformation, est positionné sur le profilé creux (2) et, au cours de la première transformation, est assemblé par continuité de forme et / ou par continuité de matière.

26. Procédé selon l'une quelconque des revendications 23 à 25, dans lequel l'âme (8) du profilé et / ou l'élément de retenue (12), au cours de la première transformation, est moulé(e) ou sont moulés par injection, comme pièce d'usinage moulée par injection, ou bien est moulé(e) ou sont moulés en mousse.
